# EUROPEAN PATENT APPLICATION

(11) **EP 3 651 090 A1**
(43) Date of publication of application: **13.05.2020**
(21) Application number: 19207918.4
(22) Date of filing: 08.11.2019
(51) Int. Cl.: G06Q 10/06, G06Q 10/08

(54) **AGRICULTURAL OPERATION LOGISTICS**

(30) Priority: 08.11.2018 GB 201818186
(71) Applicant: AGCO International GmbH, 8212 Neuhausen am Rheinfall (CH)
(72) Inventor: BILDE, Morten, DK-8930 Randers NØ (DK); NILSSON, Rene, Kenilworth CV8 2TQ (GB)
(74) Representative: AGCO Intellectual Property Department

(57) **Abstract**

There is disclosed a system for performing an agricultural operation according to a logistic plan comprising a number of tasks, said system comprising an operation deviation module and an operation coach module. The deviation module is configured to receive the logistic plan from the operation logistics module and measurements from the feedback loop and determine if there has been a deviation from the logistic plan and notify the coach module of any such deviation. The coach module is configured to store a deviations catalogue and determine, by way of reference to the deviations catalogue, if any such deviation requires an update to the logistic plan; perform any such update to the logistic plan, and; send any such updated logistic plan to the operation logistics module.

## Description

### Field of Invention

The present invention relates to a system for agricultural operation logistics. In particular, the invention relates to a system architecture for use in running such an agricultural operation, such as a harvest logistics plan.

### Background of invention

The coordination of various pieces of agricultural machinery and other assets during a harvesting, or other agricultural, process by means including a plan generated by an algorithm running on a computer system - so called 'harvest logistics', is known, but is a field of endeavour in which much improvement remains to be made. WO2017/077113 discloses a harvest logistics system in which a harvest plan is generated based on parameters including the type of physical units available, geographical geometry, user preferences, and so on. The plan may be updated during a harvesting process depending on a change to some parameters.

In practice a harvest plan or other agricultural operation logistic plan includes a number of path plans and other tasks for the plurality of vehicles and other equipment involved in the operation, as well as a number of expectations as to other parameters such as, for example, the dimensions and layout of a field, the route which may be followed through the field, and/or the yield of crop in a particular section of a field. In practice also, any of the vehicles or other equipment involved in the operation may at some point deviate from the individual path plan or other task, or any one of the other parameters may vary in reality, thus introducing a deviation to the harvest plan. The deviation may be due to any number of possible issues such as yield variation, or in the case of vehicles, deviation due to the inevitable coarseness of human control, or the presence of an unanticipated obstacle in a field, or an entry of a vehicle to a field at an unanticipated entry point, and so on. The introduction of these variances can lead to a stalling of the operation or the requirement to update the plan. Such variances may differ qualitatively from classic 'faults' (such as a machine/vehicle failure or GPS failure or other failure of physical unit), as all the active elements of the system are still considered to be present and working, only that a variance to the plan has arisen. When such variances occur, however, and this is not unlikely given the sometimes unpredictable nature of such operations, a re-plan of the operation may be required unacceptably often.

Improvements to agricultural operations logistics systems would thus be desirable.

### Summary of Invention

Accordingly there is provided in an aspect a system for performing an agricultural operation as claimed in claim 1.

The advantage of this system is that a certain level of variability of the performance of the logistic plan is allowed for and constant re-planning of the logistic plan becomes unnecessary. A re-plan is only initiated when the deviation from the logistic plan is deemed to be sufficiently grave as to require it.

The operation logistics module, deviation module and coach module may comprise one or more processing devices. Each module may be embodied in a separate processing device, or each module may be a sub-module or a separate software module running on a single processing device. The deviation module and coach module may be considered a supervision level of the system architecture, whilst the logistics module, feedback loop and measurement elements of the system may be considered to be part of an execution level of the system.

The deviations catalogue may comprise a list of deviations which are critical, and thus require an update to the logistic plan, and a list of deviations which are not critical, and where an update to the logistic plan is thus not required. The list may comprise a set of deviation attributes which result through logical process in a decision that a deviation is either critical or non-critical.

The deviations catalogue may comprise a list of deviation attributes. The coach module may refer to the list of deviation attributes and perform a series of logic steps to determine if a particular deviation is critical or non-critical. The output of each logic step may be to: ignore or discard the deviation and not update the plan; check a further attribute of the deviation, or; trigger an update to the deviation plan.

Deviation attributes may include: phases of a logistic plan; types of deviation, or; whether a phase of a logistic plan is yet to begin, is about to begin and has been sent as an instruction to an equipment item, or; is underway. When an instruction has been sent it may be regarded as 'Initiated' or 'Init'. When an instructed phase of the logistic plan is underway, it may be regarded as in execution, or 'Exec'.

It is anticipated that in most instances there will be a user monitoring the performance of the agricultural operation via the thin client. The user is likely to wish to retain the ability to control whether the logistic plan is updated or not. Accordingly when the coach module determines that the logistic plan requires updating and prepares an updated logistic plan, the user will be prompted to decide, via the thin client, whether the updated logistic plan should be adopted by the system or not.

The thin client may be any device which presents data to the user, such as a desktop, laptop, tablet, smartphone or user interface on an equipment item. The user may be an operator of an equipment item or may be overseeing the operation locally or remotely.

### Brief Description of Drawings

The invention will now be described in more detail by reference to the attached Figures, in which:
Figure 1 shows a schematic view of a system for performing an agricultural operation, in this case a harvesting operation;
Figure 2 shows a system, in schematic form, for enacting a logistic plan for an agricultural operation such as the harvesting operation of Figure 1, as well as aspects of the environment;
Figure 3 shows a system in accordance with aspects of the present application, where the system has a deviation coping architecture; and
Figure 4 shows an example logical step routine carried out by the Harvest Coach.

### Specific Description

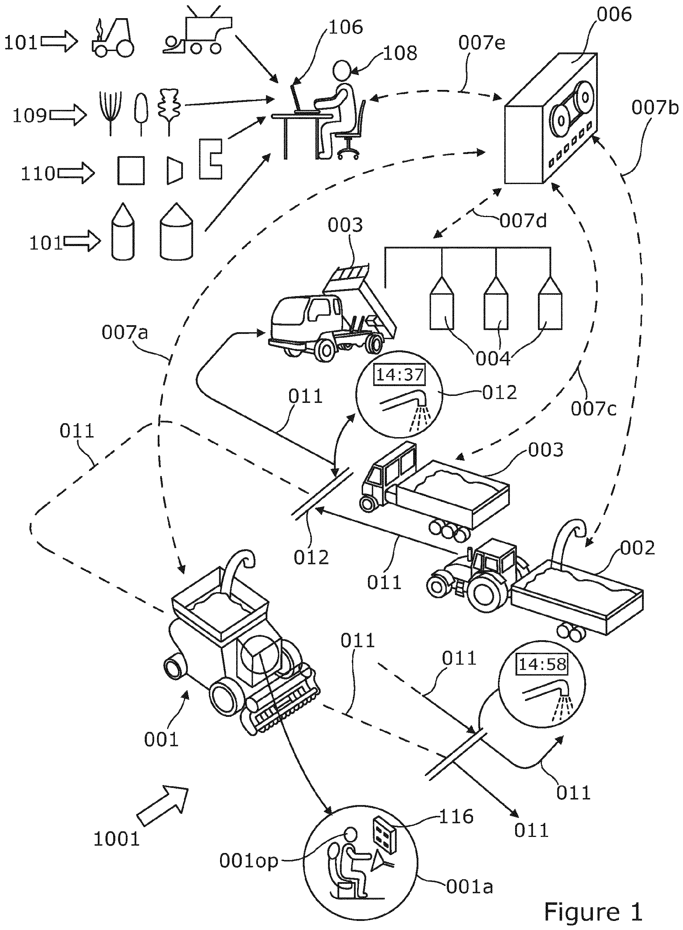

Figure 1 shows a schematic view of a system for performing an agricultural operation, in this case a harvesting operation. It shows equipment units a harvester 001, a crop carting item 002 comprising a tractor and trailer, further crop carting units 003 comprising a truck and trailer, and storage items comprising grain storage bins 004. Also shown is a processor 006 which comprises an operation logistics module 006a, a deviation module 006b and a coach module 006c as well as a deviations catalogue 006d. The processor 006 is in communication with the equipment units via a wireless network represented by communication lines 007a-d as well as with a simulation tool 106 via line 007e from which it obtains an original logistic plan. The simulation tool 106 is a processor arranged to define an ideal or initial logistic plan from data selected by a user, in this case a farmer 108, said data deriving from a database listing available equipment units 101, parameters such as crop type 109 and fields 110. In this case processor 006 is a cloud server and part of the communication route to the equipment units is an internet connection. Other physical arrangements will be readily recognised and appreciated by the skilled person, such as the internet connection being replaced by other forms of wireless connection, and processor 006 being part of tool 106, but these are incidental and expected variations within the scope of the invention.

In operation the system functions such that processor 006 reads the logistic plan and deploys instructions from the plan, defining routes 011 to the equipment items 001, 002 and 003 as well as synchronisation or meeting points 012. Equipment item 001, in partial close-up 001a, can be seen to have an operator 001op who receives the plan instructions on thin client 116, in this case a table computing device, and oversees the running of the harvesting operation.

In alternatives, it will readily be recognised that the thin client may be a smartphone or laptop or other similar computing device readily able to display data to the user 001op. The tool 106 may also be the, or a, thin client and the farmer 108 may be overseeing the operation from the remote location.

In operation the processor 006 receives feedback including location data from the equipment items 001, 002, 003 (equipped with GPS units 001gps, 002gps, 003gps, not shown) as well as data indicating how much grain is in the units 001, 002, 003 and 004 (from sensors 001 g, 002g, 003g, 004g in the grain receptacles, not shown). In this way the processor 006 is able to determine whether a particular instruction has been completed as well as how much of the overall logistic plan has been completed. Also the processor is able to determine from the feedback data whether there has been a deviation from the logistic plan, for example if an equipment unit is not in the right location or whether a grain receptacle is fuller or less full than might be expected. Depending on whether the deviation is critical or not, it may be necessary to update the logistic plan. For example, if a grain bin of a combine harvester 001 is significantly fuller than expected, it may need to be met earlier by a crop carting unit 002 to be unloaded if it appears that it will otherwise overflow or the harvester 001 will need to stop to prevent the overflow. However by way of further example if the harvester is merely 20 yards less far down a particular crop row than expected, the only impact is that it will meet its expected synchronisation point with crop carting unit 002 just 20 seconds later, which 20 seconds could be made up by a driver (human or autonomous) of the crop carting unit 002 as it/he travels to grain bin 004 on the next leg of its/his programmed route, and so a re-plan is not necessary. These are merely by way of examples, however the way in which the decision is made is illustrated in the further Figures.

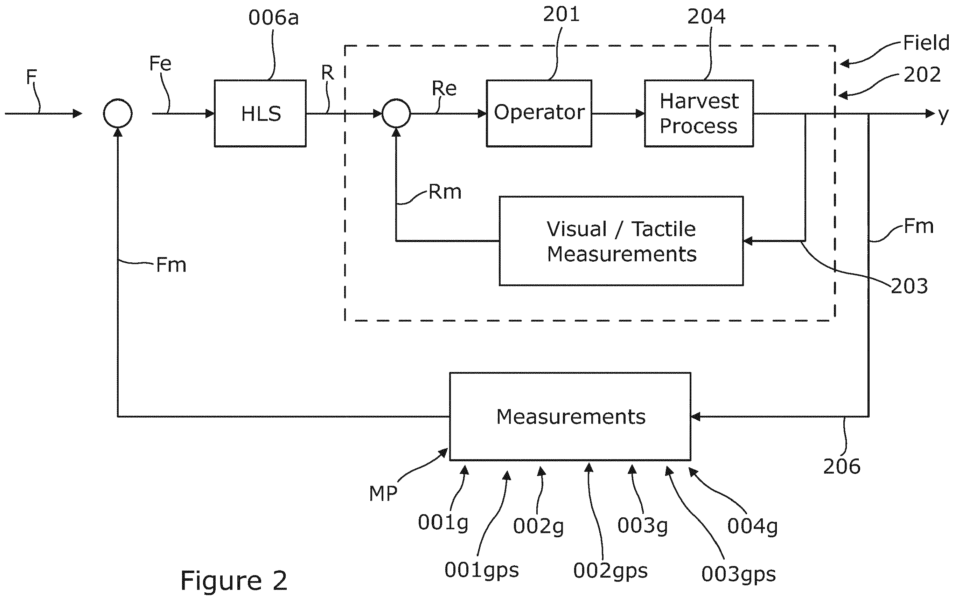

Figure 2 shows a system, in schematic form, for enacting a logistic plan for an agricultural operation such as the harvesting operation of Figure 1, as well as aspects of the environment. In prior art systems such as that of WO2017/077113, this system would in principle enable the following of a generated logistic plan. This system shows an operation logistics module 006a in the form of a Harvest Logistics System (HLS) which reads a desired state of the plan F as initially generated in the simulation tool 106. From this plan F the HLS outputs a route R to the in the form of a waypoint to be reached by an operator 201 of a mobile equipment item 001, 002, 003. Note this operator may be human or may be a control system of an autonomous vehicle. As the logistic plan is run, the HLS 006a measures available measurement parameters MP from the equipment unit sensors (for example, GPS coordinates 001-003gps, grain intake, level of grain bin 001-004g, etc), computes the remainder of the logistic plan as 'error' Fe, and outputs further routes by noting the already reached waypoints as 'discarded'. The operator operates the vehicle to follow route R, changing its location Y. The result is an outcome Rm and Fm of the expected process state which is fed back into the overall operation loop 206. Within the 'real space' or 'Field' 202 is also a local loop 203 which comprises the Operator 201 who enables a particular Harvest Process 204, and who manages the performance of the route R by Visual and Tactile Measurement or Sensor measurement (which may be assisted by technology on the equipment items, if the operator is human) so that small in-Field local divergences or sections of route R that are completed, shown as Rm, resulting in a requirement to update the route R to route Re (Re being either the remainder of the task to perform, or minor changes to maintain route R due to minor variances), as noted by the operator, can be enacted.

In case the overall logistic plan is not exactly followed for some reason, a deviation appears and this affects the continuation of the logistic plan. Such a deviation occurrence translates to a value of the outcome Fm which does not match the value expected by the plan F. In the case of this system, there is no means of logic to produce a continuation route R from the point of the deviation, nor a new plan F.

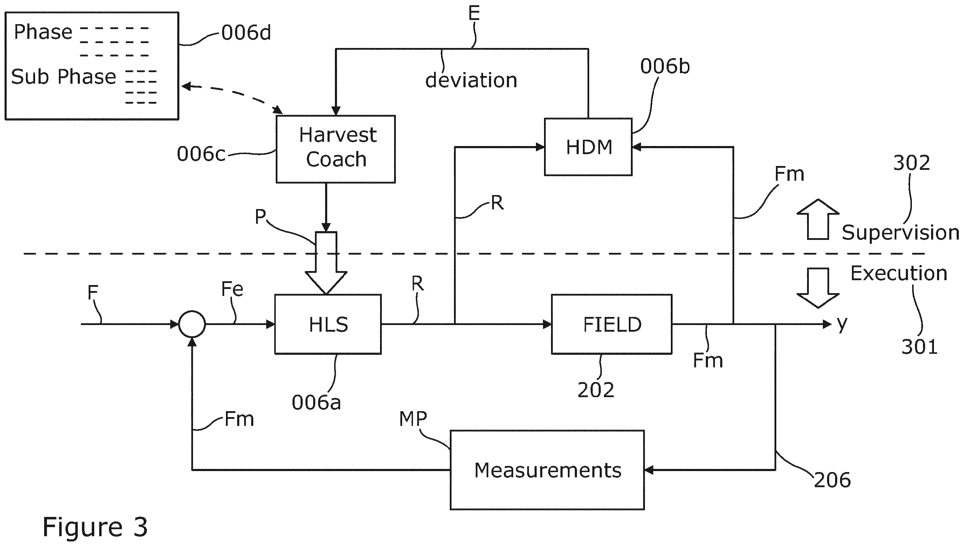

Figure 3 shows a system in accordance with aspects of the present application, where the system has a deviation coping architecture.

In this system, the components familiar from figure 2 appear as an 'Execution level' 301 of operation, and the 'Field' element 202, which is understood to include the Operator 201, Harvest Process 204 and in-field feedback loop 203 with visual/tactile/sensor measurements, is shown as a single block. There is additionally shown a 'Supervision' level 302 to the system, which includes a Deviation Module 006b and a Coach Module 006c, here shown as HDM (Harvest Deviation Module) and Harvest Coach respectively. The route segment R from the HLS is additionally fed to the Deviation Module, and the output Fm from the Field space, as measured by the various sensors, is fed to the Deviation Module also. When a deviation from the expected values of Fm is observed by the Deviation Module, it relays this event E to the Harvest Coach.

The Harvest Coach then performs the necessary operations to decide whether the deviation demands the generation of a new Logistic plan or if it is possible to continue to operate. There is a logic following protocol built in to the Harvest Coach which reads from a Deviations Catalogue 006d, which may be understood as a listing of deviation attributes leading to a definition of deviations which may be managed and what actions are needed when a deviation is detected.
In the case of a critical deviation (for example, wrong row position or breakdown of a vehicle) which demands a re-plan and issuing of a new logistic plan or new route R, the Harvest Coach deploys a new logistic plan to the Harvest Logistic System as illustrated by arrow P.

A typical deviation will be a position deviation. A position deviation can fall into one of the following 3 phase categories, in this example being:
i/ Open Field: occurring between the start of a harvest in a field and the completion of harvesting the headlands;
ii/ Harvest Rows: the harvesting of the rows in the majority of the field;
iii/ Finalise: all activities in the field are completed after the finishing of the work rows.

To keep track of the execution status of a phase, each of the first two phases may be divided into two sub-phases:
a/ an Initialisation or 'Init' sub-phase in the case that the phase was commanded but there is not yet evidence that the operation is being executed, and
b/ an Execution or 'Exec' sub-phase where the operation is under way.

The 'Harvest Row' phase is itself sub-divisible further into 'Workrow' and 'Headland' phases, depending on whether, for example, a combine harvester is actually harvesting crop down a row in the field or is turning on a headland.

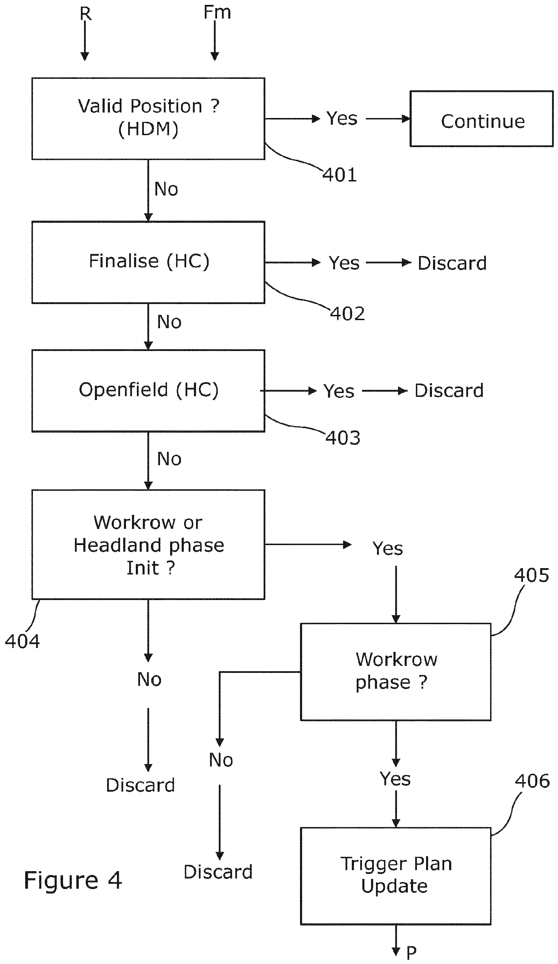

Figure 4 shows an example logical step routine carried out by the Harvest Coach which leads to a determination whether to trigger the generation of a new logistic plan or discard the registered deviation as non-critical. Other steps, such as a decision based on the magnitude of a position deviation, can of course be added.
Logic step 401 receives the inputs R and Fm to determine whether the actual position location of an equipment item is in accordance with the plan R. If the answer is 'yes' then the operation simply continues. This operation occurs in the Deviation Module.
If the answer is 'no' then the logic proceeds to step 402, in the Coach Module.
Logic step 402 asks if the particular operation phase being undertaken has finished. If the answer is 'yes' then the deviation is insignificant and the deviation is discarded. No update to the plan occurs.
If the answer is 'no' then the logic proceeds to step 403 in the Coach Module.
Logic step 403 asks if the operation phase is an 'openfield' phase, ie: between fields. If the answer is 'yes' then this is considered insignificant and the deviation is discarded.
If the answer is 'no' then the logic proceeds to step 404.
Logic step 404 asks if the operation phase is in an 'init' state. If not, then the deviation is discarded; if 'yes' then this is considered further in step 405.
Logic step 405 asks if this Is a workrow phase, which is one of the more critical parts of the operation, for a machine such as machine 001 a combine harvester. Here then, if the answer is 'no' then the deviation is discarded, but if the answer is 'yes', then a plan update is triggered, step 406, and a new plan P is generated.

The skilled person will recognise this as just one possible example from many which could arise from a harvesting operation in particular and an agricultural operation in general. As noted elsewhere herein, other deviations may occur (as well as the position deviation discussed above), such as grain flows, equipment unit speeds, or grain levels in receptacles.

Clearly the skilled person will recognise that various aspects, embodiments and elements of the present application, including as illustrated in the figures or described in the clauses above, may be arranged in differing combinations, or with suitable alternatives or equivalents, any and all of which may be considered to fall within the ambit of the inventive concept. The invention will be defined by the following claims.

## Claims

1. A system (1001) for performing an agricultural operation according to a logistic plan comprising a number of tasks, said system comprising:
- a plurality of equipment items (001, 002, 003, 004) for performing tasks of the plan, at least one of said equipment items provided with a sensor (001-004g, 001-004gps) for measuring at least one parameter which indicates a level of completeness of a task;
- at least one thin client (106, 116) for displaying plan data to a user (001op, 108);
- an operation logistics module (006a) which is configured to:
- store the logistic plan (F);
- communicate logistic plan data (R) to the at least one thin client and at least one of the equipment items or a user thereof;
- determine the amount of the plan that has been completed;
a wireless network (007a-e) for communication of logistic plan data from the operation logistics module to the at least one thin client and at least one of the equipment items or a user thereof;
and:
a feedback loop (206) for feeding measurements (MP) from the at least one sensor of the at least one equipment item to the operation logistics module for the determination of the amount of the plan that has been completed:
wherein
the system further comprises an operation deviation module (006b) and an operation coach module (006c);
said deviation module configured to:
receive the logistic plan (R) from the operation logistics module and measurements (MP) from the feedback loop (206) and determine if there has been a deviation (E) from the logistic plan and notify the coach module of any such deviation;
and
said coach module configured to:
store a deviations catalogue (006d) and determine, by way of reference to the deviations catalogue, if any such deviation requires an update to the logistic plan; perform any such update to the logistic plan, and; send any such updated logistic plan (P) to the operation logistics module,
and
wherein the operation logistics module is further configured to store and use any such updated logistic plan as a replacement for any previous logistic plan.

2. A system as claimed in claim 1 wherein the operation logistics module, the deviation module and the coach module comprise one or more processing devices.

3. A system as claimed in claim 1 or 2 wherein the deviations catalogue comprises a list of critical deviations which require an update to the logistic plan and a list of non-critical deviations which do not require an update to the logistic plan.

4. A system as claimed in any previous claim wherein the coach module makes the determination by means of a logical step process and the deviations catalogue lists deviation attributes of deviations and where the logical step output for a deviation attribute is either:
- to Discard the deviation and not update the logistic plan;
- to move to a further logical step in relation to a further deviation attribute of the deviation, or;
- to Trigger an update to the logistic plan.

5. A system as claimed in claim 4 wherein the deviations catalogue at least lists deviation attributes according to one of a plurality of phases of the logistic plan.

6. A system as claimed in claim 4 or 5 wherein the deviations catalogue at least lists deviation attributes according to one of a plurality of deviation types.

7. A system as claimed in any of claims 5 to 6 wherein the deviations catalogue at least lists deviation attributes according to whether a phase of the logistic plan is yet to begin (Init) or is underway (Exec).

8. A system as claimed in any previous claim wherein the user of the at least one thin client is prompted to give a yes/no decision as to whether an updated logistic plan should replace a current logistic plan in the operation logistics module, following a determination by the harvest coach that the deviation requires an updated logistic plan and prepares said updated logistic plan.

9. A system as claimed in any of claims 1 to 8 wherein the agricultural operation is a harvesting operation.

10. A system as claimed in any of claims 1 to 9 wherein the equipment items comprise at least one of each of the following:
- a harvesting item;
- a crop carting item;
- a storage item.

11. A system as claimed in either of claims 1 to 10 wherein the parameters indicating completeness of a task comprise at least one of the following:
- a position of an equipment unit;
- an amount of grain in a harvesting item or a storage item;
- a header position;
- a grain intake or flow rate;
- a speed of an equipment unit.

12. A system as claimed in any of claims 5 to 11 wherein the phases of the logistic plan include one or more of the following:
- an openfield phase;
- a headland phase;
- a workrow phase.

13. A system as claimed in any of claims 6 to 12 wherein the deviation types of the logistic plan include one or more of the following:
- a variation of position of an equipment item from a position anticipated by the logistic plan;
- a variation of a speed of an equipment item from a speed anticipated by the logistic plan;
- a variation of an amount of grain in an equipment item from an amount anticipated by the logistic plan;
- a variation of a grain intake or flow rate from an intake or flow rate anticipated by the logistic plan;
- a variation of timing of an equipment item use from a timing anticipated by the logistic plan.
